(19) Europäisches Patentamt
European Patent Office
Office européen des brevets

(11) **EP 2 374 823 A1**

(12) **EUROPEAN PATENT APPLICATION**

(43) Date of publication:
**12.10.2011 Bulletin 2011/41**

(51) Int Cl.:
**C08F 210/06** (2006.01)  **C08F 2/01** (2006.01)
**C08F 2/02** (2006.01)

(21) Application number: **10003747.2**

(22) Date of filing: **07.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Borealis AG**
**1220 Vienna (AT)**

(72) Inventors:
• **Nyfors, Klaus**
  **06150 Porvoo (FI)**

• **Leskinen, Pauli**
  **00700 Helsinki (FI)**
• **Hätönen, Jari**
  **06100 Porvoo (FI)**
• **Tuominen, Olli**
  **00930 Helsinki (FI)**

(74) Representative: **Kador & Partner**
**Corneliusstrasse 15**
**80469 München (DE)**

(54) **Production of alpha-olefin copolymers in a loop reactor with variable comonomer feed**

(57)    The present invention concerns a process for producing an alpha-olefin copolymer comprising copolymerizing an alpha-olefin monomer (A) and at least one alpha-olefin comonomer (B) in a loop reactor, wherein
the loop reactor comprises at least one feeding port FP1 for feeding the alpha-olefin comonomer (B) into the loop reactor, characterized in that the feeding rate FR1, defined as amount of alpha-olefin comonomer (B) feed per time through feeding port FP1, is varied during a variation cycle, a multistage process comprising said process and an alpha-olefin copolymer obtainable by such processes.

FIGURE 1

EP 2 374 823 A1

## Description

The present invention concerns a process for producing an alpha-olefin copolymer in a loop reactor which comprises one or more feeding ports for feeding alpha-olefin comonomer to the slurry reactor.

One of the main processes for producing alpha-olefin copolymers, like propylene copolymers, is the copolymerization of an alpha-olefin monomer, such as propylene, with one or more types of alpha-olefin comonomers, e.g. ethylene, in the presence of a suitable polymerization catalyst is a slurry phase reaction in which solid copolymer particles are formed in a liquid phase.

Among the main problems in slurry phase polymerization reactions is that the freshly polymerized copolymer particles tend to stick to the metal surfaces of the slurry reactor wall and thus reduce heat transfer through the wall. Especially copolymer particles produced from alpha-olefin monomers and a high amount of alpha-olefin comonomer having a high reactivity, such as ethylene, show an increased tendency to stick to the metal reactor walls causing reactor fouling.

This problem occurs in all kinds of slurry reactors, but especially in a loop reactor, the principle of which is disclosed e.g. in US-A-4,582,816, US-A-3,405,109, US-A-3,324,093, EP-A-0 479 186, and US-A-5,391,654. Common loop reactors known in the art for polymerizing copolymers have one feeding port for introducing the alpha-olefin monomer and comonomer(s) into the reactor. When feeding alpha-olefin comonomers having a high reactivity, such as ethylene, into a loop reactor having long loops, a high amount of the highly reactive comonomer is already polymerized into the copolymer chain in the reactor area directly after the feeding port. In this way, polymer particles are formed with an increased amount of comonomer units which stick to the loop walls near the feeding port. Because of its high reactivity, comonomer concentration in the slurry decreases along the flow path of the slurry reactor leading to a broad concentration gradient of comonomer molecules in the slurry which also depends on the length of the slurry reactor and the cycle times.

Thus, in order to produce a copolymer with a specific amount of comonomer, the comonomer concentration at the feeding port has to be higher than would be necessary to obtain the targeted comonomer content in the copolymer, which, on the one hand, results in increased introduction of comonomer units in the copolymers polymerized in the area near the feeding port and increased reactor fouling in this area, and, on the other hand, to variations in the comonomer amount of individual copolymer chains.

Due to this problem the comonomer content of random copolymers produced in slurry reactors, especially loop reactors, is usually limited to a maximum content of 5.0 wt.%.

In US 7,053,163 it has been suggested to split the comonomer feed and to introduce the splitted feed simultaneously at an adjusted feeding rate through two or more feeding ports which are situated along the length of a loop reactor in order to produce ethylene-propylene random copolymer fluff with a reduced tendency to agglomerate or stick together during manufacturing and post-reactor finishing. However, also when the comonomer feed is introduced through a multitude of feeding ports, reactor fouling will occur in the areas near those feeding ports.

It is therefore an object of the present invention to provide an improved process for alpha-olefin copolymerization in slurry phase reactors, such as loop reactors, in which less reactor fouling occurs. Simultaneously, the improved process should enable the production of alpha-olefin copolymers with a high amount of comonomer and with a more even distribution of the comonomer in the produced copolymer resulting in an improved randomness and hence improved product properties.

The present invention is based on the finding that the above objects can be achieved by a copolymerization process in which the feeding rate of the comonomer into the slurry reactor, such as a loop reactor, through a feeding port is varied.

Thus, the present invention provides a process for producing an alpha-olefin copolymer comprising copolymerizing an alpha-olefin monomer (A) and at least one alpha-olefin comonomer (B) in a loop reactor, wherein the loop reactor comprises at least one feeding port FP1 for feeding the alpha-olefin comonomer (B) into the loop reactor, characterized in that the feeding rate FR1, defined as the amount of alpha-olefin comonomer (B) feed per time through feeding port FP1, is varied during a variation cycle.

It has surprisingly been found that by periodically varying the feeding rate of the at least one alpha-olefin comonomer, reactor fouling can be significantly decreased even at high alpha-olefin comonomer concentrations so that the heat transfer from the reaction mixture to the cooling jacket of the loop reactor is improved.

Additionally, it has been found that the alpha-olefin comonomer concentration over the loop reactor length can be distributed more evenly resulting in a more even distribution of the alpha-olefin comonomer in the alpha-olefin random copolymer chains and in a higher randomness of the copolymer.

Thus, by means of the inventive process, on the one hand, the limitations of operation conditions in slurry polymerization in a loop reactor can be overcome resulting e.g. in increased capacity, improved heat transfer, and lower operation temperatures. On the other hand, the properties of the alpha-olefin copolymers produced in slurry polymerization in a loop reactor can be improved leading e.g. to a more even alpha-olefin comonomer distribution in the copolymer, higher randomness, or higher alpha-olefin comonomer content in the copolymer.

Products such as films produced from a alpha-olefin copolymer with increased randomness show improved mechanical and optical properties, for example a reduction in the blooming phenomenon and an improvement in heat sealing properties.

The term "alpha-olefin monomer (A)" denotes a type of alpha-olefin monomer of distinct chemical structure which makes up the major part of the produced alpha-olefin copolymer, usually makes up an amount of more than 50 wt% of the alpha-olefin copolymer.

The term "alpha-olefin comonomer (B)" denotes a type of alpha-olefin monomer which differs in chemical nature from alpha-olefin monomer (A). It usually makes up an amount of less than 50 wt% of the alpha-olefin copolymer. If more than one alpha-olefin comonomer is present in the copolymer, usually the combined amounts of all comonomers make up an amount of less than 50 wt% of the alpha-olefin copolymer.

Generally, the feeding ports through which alpha-olefin comonomer (B) is fed to the loop reactor are denoted as "FPx" which designates the $x^{th}$ feeding port, e.g. "FP1" is the $1^{st}$ feeding port. The feeding rates through the feeding ports are denoted in an analogous way.

The variation cycle is the period of time of a particular variation pattern of the feeding rate(s) of the feeding port(s). Usually, the variation pattern of the variation cycle is repeated a multitude of times during the operation of the loop reactor.

For example, a very simple variation pattern would be to feed alpha-olefin comonomer (B) through a first feeding port FP1 at a feeding rate of 400 kg/h for 10 min and then at a feeding rate of 0 kg/min for another 10 min. Thus, the duration of the variation cycle would be 20 min.

Preferably, the feeding rate FR1 of alpha-olefin comonomer (B) through feeding port FP1 into the slurry reactor is varied during the variation cycle from a minimum value $FR1_{min}$ to a maximum value $FR1_{max}$ wherein $FR1_{min}$ is low enough so that the reactor walls in vicinity of the feeding port FP1 are cleaned from polymer deposition.

The variation from the minimum value $FR1_{min}$ to a maximum value $FR1_{max}$ may be effected by directly "switching" the feeding rate $FR1_{min}$ to $FR1_{max}$, but also by applying intermediate feeding rates for a certain time period to the point of continuously varying the feeding rate from $FR1_{min}$ to $FR1_{max}$, so that if graphically displayed a sinusoidal variation of the feeding rate with time is obtained.

The minimum value $FR1_{min}$ necessary to ensure that the reactor walls in vicinity of the feeding port FP1 are cleaned from polymer deposition is dependent on the particular reactor setup and the copolymer to be produced, but can in every case easily and reliably be determined by the skilled person observing the heat transfer coefficient or, alternatively, from experience collected from prior runs.

Preferably, $FR1_{min} \leq 0.5\ FR1_{max}$, more preferably $FR1_{min} \leq 0.3\ FR1_{max}$, still more preferably $FR1_{min}$

$\leq 0.1\ FR1_{max}$, and most preferably $FR1_{min} = 0$.

The loop reactor may comprise one feeding port FP1 for feeding alpha-olefin comonomer (B) into the reactor but may also comprise two or more feeding ports, such as two feeding ports FP1 and FP2 or more, three feeding ports FP1, FP2 and FP3 or more, four feeding ports FP1 to FP4 or more or five feeding ports FP1 to FP5 or more.

Due to economical reasons the upper limit of feeding ports is suitably twelve feeding ports FP1 to FP12.

It is preferred that, where the loop reactor comprises more than one feeding port for feeding alpha-olefin comonomer (B) to the reactor, the feeding rate FRx through at least two, more preferably all, of the feeding ports FPx is varied during the variation cycle from a minimum value $FRx_{min}$ to a maximum value $FRx_{max}$.

For the feeding ports through which the feeding rate is varied it is preferred that $FRx_{min} \leq 0.5\ FRx_{max}$, more preferably $FRx_{min} \leq 0.3\ FRx_{max}$, still more preferably $FRx_{min} \leq 0.1\ FRx_{max}$, and most preferably $FRx_{min} = 0$.

It is furthermore preferred in the inventive process that, where the loop reactor comprises more than one feeding port FR1 for feeding alpha-olefin comonomer (B) to the reactor, the feeding rates of alpha-olefin comonomer (B) FRx through all feeding ports FPx for feeding the alpha-olefin comonomer (B) into the slurry reactor are varied in a manner so that the total feeding rate $FR_{tot}$, which is equal to the sum of the feed rates of alpha-olefin comonomer (B) through all of the feeding ports (FRx), is constant at any time during the variation cycle.

In this context, a "constant feeding rate" denotes a variation of the filtered, i.e. short time averaged (e.g. over 20 s to 1 min), feeding rate of the alpha-olefin comonomer (B) of not more than 10%, more preferably of not more than 5%, still more preferably of not more than 3%.

During a variation cycle it may also be so for a short period within the cycle, e.g for a period smaller than 10 %, preferably smaller than 5 %, more preferably smaller than 2 % of the total cycle duration, preferably at the beginning of a cycle, that the feeding rates FRx through all feeding ports FRx is 0. This may apply also in the above described preferred embodiment wherein the total feeding rate $FR_{tot}$, which is equal to the sum of the feed rates of alpha-olefin comonomer (B) through all of the feeding ports (FRx), is constant at any time during the variation cycle, i.e. $Fr_{tot}$ is then constant at any other time during the variation cycle.

In a preferred embodiment of the process of the invention, the slurry reactor comprises at least, or shows exactly, two feeding ports FP1 and FP2 for feeding alpha-olefin comonomer (B) into the slurry reactor.

In these embodiments it is furthermore preferred that the feeding rates FR1 and FR2 of alpha-olefin comonomer (B) through the two feeding ports FP1 and FP2, respectively, are varied during the variation cycle in a manner that the total feeding rate FR1 + FR2 of the alpha-olefin comonomer (B) into the slurry reactor through feeding ports FP1 and FP2 is constant at any time during the variation cycle.

In the embodiment where the loop reactor has exactly two feeding ports it is preferred that $FR1_{min}$ and/or $FR2_{min} \leq 0.5\ FR_{tot}$, more preferably $FR1_{min}$ and/or $FR2_{min} \leq 0.3\ FR_{tot}$, still more preferably $FR1_{min}$ and/or $FR2_{min} \leq 0.1\ FR_{tot}$, and most preferably $FR1_{min}$ and/or $FR2_{min} = 0$.

For example, in a very simple feeding rate variation pattern illustrating the above preferred embodiment of a loop reactor having exactly two feeding ports for feeding the alpha-olefin comonomer (B) to the reactor, during the first 10 min comonomer is fed through feeding port FP1 at a rate FR1 of 400 kg/h and, simultaneously, for the same duration of 10 min the rate FR2 through feeding port FP2 is 0 kg/h. Then, after 10 minutes the feeding rates of FP1 and FP2 are switched so that for the next 10 min FR1 is 0 kg/h and FR2 is 400 kg/h. Thus, the variation cycle duration is 20 min and the combined feeding rate FR1 + FR2 to the slurry reactor is constant at 400 kg/h over the whole variation cycle.

The polymerization process of the invention preferably is a slurry polymerization.

It is furthermore preferred that wherein the loop reactor comprises up to 3 feeding ports FPx for alpha-olefin comonomer (B), any two neighboring feeding ports for feeding the alpha-olefin comonomer (B) into the loop reactor are situated along the flow path of the loop reactor such that the shortest distance r between two neighboring feeding ports follows the equation

$$0.2 \cdot l \leq r \leq 0.5 \cdot l$$

wherein l is the total length of the flow path of the loop reactor.

Wherein such a loop reactor comprises more than 3 feeding ports FPx for alpha-olefin comonomer (B), any two neighboring feeding ports for feeding the alpha-olefin comonomer (B) into the loop reactor are situated along the flow path of the loop reactor such that the shortest distance r between two neighboring feeding ports follows the equation

$$(1/(N+2)) \cdot l \leq r \leq (1/(N-2)) \cdot l$$

wherein l is the total length of the flow path of the loop reactor, and N is the total number of feeding ports FPx.

Preferably, the variation cycle duration for varying the feeding rate(s) of alpha-olefin comonomer (B) into the loop reactor is from 1 minute to 500 minutes, more preferably from 7 minutes to 100 minutes, and most preferably from 12 minutes to 50 minutes.

For cleaning the reactor walls from sticking copolymer particles it is advisable to apply $FRx_{min}$ for a period of e.g. one minute or longer during the variation cycle. At high alpha-olefin comonomer concentrations the reactor walls immediately start to foul, but similarly when the alpha-olefin comonomer feed is decreased the walls will start to clean back to a stationary level as the alpha-olefin comonomer concentration is lower.

At shorter periods for varying the alpha-olefin comonomer feeding rate at one feeding port, e.g. less than one minute, the reactor average concentration is kept close to ideal and also the alpha-olefin distribution is narrowed over reactor length and in the polymer.

In slurry polymerization the polymer particles formed in the polymerization, together with the catalyst fragmented and dispersed within the particles, are suspended in the fluid hydrocarbon. The slurry is agitated to enable the transfer of reactants from the fluid into the particles.

Slurry polymerization preferably is carried out as so-called bulk polymerization. By "bulk polymerization" is meant a process where the polymerization is conducted in a liquid monomer essentially in the absence of an inert diluent. However, as it is known in the art the alpha-olefin monomers used in commercial production are never pure but always contain aliphatic hydrocarbons as impurities. For instance, the propylene monomer may contain up to 5 % of propane as an impurity. As propylene is consumed in the reaction and also recycled from the reaction effluent back to the polymerization, the inert components tend to accumulate, and thus the reaction medium may comprise up to 40 wt% of other compounds than monomer. It is to be understood, however, that such a polymerization process is still within the meaning of "bulk polymerization", as defined above.

The temperature in the slurry polymerization is typically from 50 to 110 °C, preferably from 60 to 100 °C and in particular from 65 to 95 °C. The pressure is from 1 to 150 bar, preferably from 10 to 100 bar. In some cases it may be preferred to conduct the polymerization at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture.

The slurry polymerization is preferably conducted in a loop reactor. The loop reactor is formed by an endless pipe along which the slurry is circulated with a high velocity by using a circulation pump. Loop reactors are generally known in the art and examples are given, for instance, in US-A-4582816, US-A-3405109, US-A-3324093, EP-A-479186 and US-A-5391654.

The loop reactor comprises feeding ports for the reactants, such as monomers and hydrogen, catalyst components and other feedstock material. Such feeding ports preferably include equipment to control the feeding rate of the components. It is possible to introduce each component separately through individual feeding ports but it is also possible to combine two or more feed streams into one feeding port through which the components are introduced into the reactor.

Typically, the polymerization catalyst components are introduced through one feed port and all other reactants (e.g. monomer, comonomer and hydrogen) are introduced through another feed port.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

During slurry polymerization other components may also be introduced as it is known in the art. Thus, hydrogen can be used to control the molecular weight of the polymer. Process additives may also be introduced into the reactor to facilitate a stable operation of the process.

The alpha-olefin monomer (A) may be introduced into the loop reactor together with the at least one alpha-olefin comonomer (B) through one or more of the feeding ports FPx for feeding alpha-olefin comonomer (B) into the reactor.

However, the alpha-olefin monomer (A) may also be introduced into the loop reactor through one or more feeding ports separate from the feeding ports FPx for feeding alpha-olefin comonomer (B).

It is preferred that hydrogen is introduced into the loop reactor through the at least one feeding port (FP1) for feeding the at least one alpha-olefin comonomer (B) into the loop reactor in addition to the at least one alpha-olefin comonomer (B).

The at least one alpha-olefin comonomer (B) preferably is selected from a group of alpha-olefins having from two to twelve carbon atoms. Thereby, one or more alpha olefin species may be selected. More preferably the at least one alpha-olefin comonomer (B) comprises ethylene. In an especially preferred embodiment at least one alpha-olefin comonomer (B) consists of ethylene.

The amount of at least one alpha-olefin comonomer (B) in the alpha-olefin copolymer is preferably from 0.1 to 15.0 wt%, more preferably from 1.0 to 12.0 wt% and most preferably 3.0 to 8.0 wt%.

It is known in the art that the amount of alpha-olefin comonomer (B) in the alpha-olefin copolymer can be adjusted by adjusting the feeding rate(s) FRx of alpha-olefin comonomer (B) through the feeding port(s) FPx into the slurry reactor.

It is further preferred that the alpha-olefin monomer (A) has from 3 to 6 carbon atoms, more preferably, is propylene.

Preferably, where the alpha-olefin is not ethylene, the alpha-olefin comonomer (B) is ethylene.

In one embodiment the inventive process may be a single stage process.

In a preferred embodiment, the inventive process in any of the above described embodiments is part of a multi-stage process.

It is preferred that the multi-stage process comprises a further polymerization stage, which still more preferably is conducted in a gas phase reactor. Most preferably, the inventive slurry polymerization stage is followed by a gas phase polymerization stage.

When the slurry polymerization stage is followed by a gas phase polymerization stage it is preferred to conduct the slurry directly into the gas phase polymerization zone without a flash step between the stages. This kind of direct feed is described in EP-A-887379, EP-A-887380, EP-A-887381 and EP-A-991684.

It is further preferred that the multi-stage process further comprises a prepolymerization stage.

The present invention also relates to an alpha-olefin copolymer obtainable by a process according to any of the preceding claims.

In the following, the process of the invention is further illustrated by way of examples and by reference to the figures.

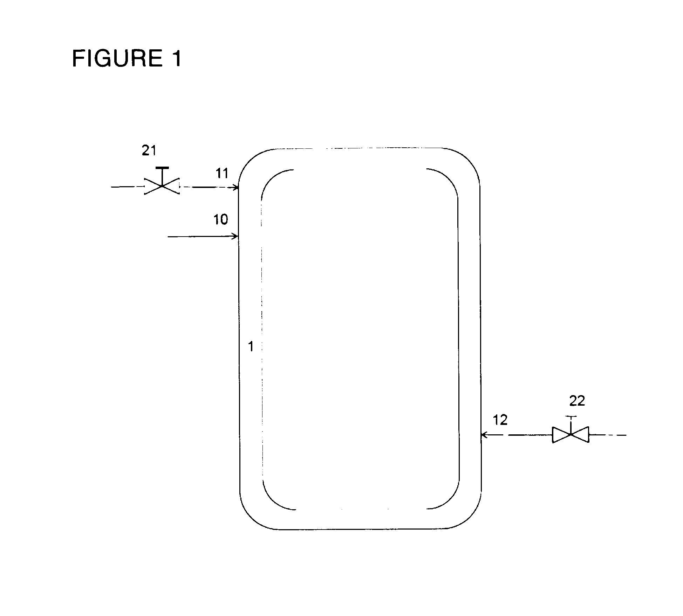

Fig. 1 shows a schematic illustration of a loop reactor for use in the process according to the invention.

## Examples

Fig. 1 shows a schematic illustration of a process according to the invention wherein a loop reactor 1 having two feeding ports 11 and 12 for feeding the alpha-olefin comonomer (B) into the reactor is used. The loop reactor 1 comprises a feeding port for the alpha-olefin monomer (A) and auxiliary reactants 10, a first feeding port for the alpha-olefin comonomer (B) 11 and a second feeding port for the alpha-olefin comonomer (B) 12. The first feeding port includes a valve 21 and the second entry port a valve 22. At the beginning of the feed variation cycle, valve 21 is opened and valve 22 is closed. Simultaneously, the whole feed stream of the first reactant is directed into the loop reactor 1 via the feed port 11. The reactor is operated in this manner for a defined time, for instance for 15 minutes. Then, valve 21 is closed and valve 22 is opened. The feed stream of the alpha-olefin comonomer (B) is now directed to the slurry reactor via the second feeding port 12. Again the reactor is operated in this way for a defined time, which may be the same or different as before, but usually is the same e.g. 15 minutes. Then, valve 21 is opened again and valve 22 is closed again and the variation cycle starts from the beginning.

The feeding ports 11 and 12 may be positioned relatively freely. It is however preferred that there is a certain distance between them so that polymer layer that has adhered to the wall of the reactor in the vicinity of one feeding port is allowed to remove while the other feeding port is in use. Therefore, it is preferred that the shortest distance r along the flow path is defined by the equation:

$$0.2 \cdot l \le r \le 0.5 \cdot l$$

wherein *l* is the total length of the flow path formed by the loop reactor.

Furthermore, it is not necessary for one of the valves 21 and 22 to be open at all times.

Thus, according to the present invention, both valves may be initially closed. Then valve 21 is opened for a certain period, for instance for 10 seconds, after which it is again closed. After another period, like 30 seconds, valve 22 is opened for a certain period and then closed again.

Comparative Example 1:

Into a loop reactor having a length of 250 meters were introduced 20 t/h propylene, 27 kg ethylene per ton propylene, polymerization catalyst and hydrogen. All of the ethylene comonomer and hydrogen were fed via one feeding port. Also most of the propylene was fed via the same feeding port but a part of the propylene feed was introduced as flush streams with the catalyst feed and at the loop pump.

Consequently, the polymer production rate was 10 t/h and the ethylene content in the polymer was 3.7 % by weight.

The process was operated for a period of one week. Then the run was terminated, the reactor was emptied and inspected. Immediately after the entry point a polymeric layer at the wall of the loop reactor was observed. The layer extended some distance downstream the entry point. However, the wall upstream the entry point was clean.

Example 1:

The procedure of the Comparative Example 1 was repeated but the feeds were introduced via two entry points as follows. The distance of the two entry points was a half of the total length of the loop reactor. First, the whole feed was directed through the first entry point. The reactor was operated in this way for ten minutes after which the feed was directed to the second entry point. Then, after ten minutes the feed was redirected to the first entry point. The process was operated in this way for one week after which the run was terminated and the reactor emptied and inspected. No polymeric layer at the wall could be detected near either one of the entry points.

**Claims**

1. Process for producing an alpha-olefin copolymer comprising copolymerizing an alpha-olefin monomer (A) and at least one alpha-olefin comonomer (B) in a loop reactor, wherein
the loop reactor comprises at least one feeding port FP1 for feeding the alpha-olefin comonomer (B) into the loop reactor, **characterized in that**
the feeding rate FR1, defined as amount of alpha-olefin comonomer (B) feed per time through feeding port FP1, is varied during a variation cycle.

2. The process according to claim 1 wherein the feeding rate FR1 of alpha-olefin comonomer (B) through feeding port FP1 into the loop reactor is varied during the variation cycle from a minimum value $FR1_{min}$ to a maximum value $FR1_{max}$ wherein $FR1_{min}$ is low enough so that the reactor walls in vicinity of the feeding port FP1 are cleaned from polymer deposition.

3. The process according to claim 2 wherein $FR1_{min}$ =< 0.3 $FR1_{max}$.

4. The process according to any one of the preceding claims wherein the loop reactor comprises at least two feeding ports FP1 and FP2 for feeding alpha-olefin comonomer (B) into the loop reactor.

5. The process according to claim 4 wherein the feeding rates FR1 and FR2 of alpha-olefin comonomer (B) through the two feeding ports FP1 and FP2, respectively, are periodically varied in a manner that the total feeding rate FR1 + FR2 of the alpha-olefin comonomer (B) into the loop reactor through feeding ports FP1 and FP2 is constant at any time during the variation cycle.

6. The process according to any one of the preceding claims wherein the feeding rates of alpha-olefin comonomer (B) FRx through all feeding ports for feeding the alpha-olefin comonomer (B) into the loop reactor FPx are periodically varied in a manner that the total feeding rate $FR_{tot}$ of the alpha-olefin comonomer (B) to the loop is constant at any time during the variation cycle.

7. The process according to any one of the preceding claims wherein, where the loop reactor comprises 3 feeding ports or less FPx for alpha-olefin comonomer (B), any two neighboring feeding ports for feeding the alpha-olefin comonomer (B) into the loop reactor are situated along the flow path of the loop reactor such that the shortest distance r between two neighboring feeding ports follows the equation

$$0.2 \cdot l \leq r \leq 0.5 \cdot l$$

wherein I is the total length of the flow path of the loop reactor,
and wherein, where the loop reactor comprises more than 3 feeding ports FPx for alpha-olefin comonomer (B), any two neighboring feeding ports for feeding the alpha-olefin comonomer (B) into the loop reactor are situated along the flow path of the loop reactor such that the shortest distance r between two neighboring feeding ports follows the equation

$$(1/(N + 2)) \cdot l \leq r \leq (1/(N - 2)) \cdot l$$

wherein I is the total length of the flow path of the loop reactor, and N is the total number of feeding ports FPx.

8.  The process according to any one of the preceding claims wherein the variation cycle duration for varying the feeding rate(s) of comonomer (B) into the loop reactor is from 1 minute to 500 minutes.

9.  The process according to any one of the preceding claims wherein through at least one feeding port FP1 for feeding alpha-olefin comonomer (B) into the loop reactor additionally hydrogen is introduced into the slurry reactor.

10. The process according to any one of the preceding claims wherein the amount of alpha-olefin comonomer (B) in the produced alpha-olefin copolymer is from 0.1 to 15.0 wt%.

11. The process according to any one of the preceding claims wherein the alpha olefin monomer (A) has from 3 to 6 carbon atoms.

12. The process according to any one of the preceding claims wherein the at least one alpha-olefin comonomer (B) comprises ethylene.

13. Multi-stage process which comprises the process according to any one of the preceding claims.

14. Alpha-olefin copolymer obtainable by a process according to any one of the preceding claims.

FIGURE 1

Europäisches
Patentamt

European
Patent Office

Office européen
des brevets

# EUROPEAN SEARCH REPORT

Application Number

EP 10 00 3747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 2 174 965 A1 (BOREALIS AG [AT]) 14 April 2010 (2010-04-14) * claims * | 1-14 | INV. C08F210/06 C08F2/01 C08F2/02 |
| X,D | US 7 053 163 B1 (TIAN JUN [US] ET AL) 30 May 2006 (2006-05-30) * abstract; claims * | 1-14 | |
| X | WO 2005/077994 A1 (TOTAL PETROCHEMICALS RES FELUY [BE]; DAMME ERIC [BE]) 25 August 2005 (2005-08-25) * claims * | 1-14 | |
| A | WO 2004/024782 A2 (CHEVRON PHILIPS CHEMICAL COMPA [US]) 25 March 2004 (2004-03-25) * claims * | 1-14 | |

TECHNICAL FIELDS
SEARCHED      (IPC)

C08F

The present search report has been drawn up for all claims

| Place of search | Date of completion of the search | Examiner |
|---|---|---|
| The Hague | 20 July 2010 | Kaumann, Edgar |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 00 3747

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2010

| Patent document cited in search report | | Publication date | Patent family member(s) | | Publication date |
|---|---|---|---|---|---|
| EP 2174965 | A1 | 14-04-2010 | WO 2010040731 | A1 | 15-04-2010 |
| US 7053163 | B1 | 30-05-2006 | EP 1851254 | A2 | 07-11-2007 |
| | | | WO 2006091286 | A2 | 31-08-2006 |
| WO 2005077994 | A1 | 25-08-2005 | CN 1922219 | A | 28-02-2007 |
| | | | EA 200601476 | A1 | 27-02-2007 |
| | | | JP 2007522317 | T | 09-08-2007 |
| | | | KR 20070004694 | A | 09-01-2007 |
| | | | US 2007037937 | A1 | 15-02-2007 |
| WO 2004024782 | A2 | 25-03-2004 | AT 452914 | T | 15-01-2010 |
| | | | AU 2003272377 | A1 | 30-04-2004 |
| | | | BR 0314282 | A | 19-07-2005 |
| | | | CA 2498681 | A1 | 25-03-2004 |
| | | | DK 1556415 | T3 | 15-03-2010 |
| | | | EP 1556415 | A2 | 27-07-2005 |
| | | | ES 2338226 | T3 | 05-05-2010 |
| | | | MX PA05002807 | A | 05-12-2005 |
| | | | US 2004116625 | A1 | 17-06-2004 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4582816 A
- US 3405109 A
- US 3324093 A
- EP 0479186 A
- US 5391654 A
- US 7053163 B
- EP 479186 A
- US 3374211 A
- US 3242150 A

- EP 1310295 A
- EP 891990 A
- EP 1415999 A
- EP 1591460 A
- EP 1860125 A
- EP 887379 A
- EP 887380 A
- EP 887381 A
- EP 991684 A